# EUROPÄISCHE PATENTANMELDUNG

(11) **EP 0 947 474 A2**
(43) Veröffentlichungstag der Anmeldung: **06.10.1999**
(21) Anmeldenummer: 99106463.5
(22) Anmeldetag: 30.03.1999
(51) Int. Cl.: C02F 5/08

(54) **Einrichtung zur CO2 Dosierung zum Wasser**

(30) Priorität: 30.03.1998 DK 44298
(71) Anmelder: Guldager A/S, 3450 Allerod (DK)
(72) Erfinder: Fabricius, Claus, 3450 Allerod (DK)
(74) Vertreter: Norup, Kai

(57) **Zusammenfassung**

Einrichtung zur Dosierung von CO₂ zum Wasser, wo Impulse einer Wasseruhr ein Magnetventil eine kürzere Zeit öffnen, als die Impulse von der Wasseruhr. Die Menge an CO₂ ist durch die feste Blende bestimmt und die Dosierung geschieht stoßweise in einen senkrecht montierten Behälter mit eingetauchtem Zugangsrohr, wo das CO₂ in dem Rauminhalt gesammelt wird, zwischen dem Niederführungsrohr und dem oberen Teil des Behälters.
Das Wasser wird oben zugeleitet und die Wassergeschwindigkeit ist für die Aufnahmen von CO₂ einerlei, da derselbe pH-Wert bei sowohl großer wie kleiner Wasserentnahme gemessen wird mit derselben Menge CO₂ dosiert pr. Liter Wasser.

## Beschreibung

Die Erfindung bezieht sich auf eine Einrichtung zur Dosierung von Kohlensäure, wobei eine gegebene unveränderliche Menge CO₂ in variabler Zeit dosiert wird, gesteuert durch eine impulsgebende Wasseruhr und wo der Zusatz von CO₂ in einem von Wasser durchströmten senkrecht montierten Behälter erfolgt.

Bekannt ist die Dosierung von CO₂ zum Wasser, wo durch die Kaskadenkupplung eine variierte Mengendosierung erfolgt, abhängig vom Verbrauch. Um eine gute Aufnahme des CO₂*s zu sichern, wird ein Mixer verwendet, wo es sich doch gezeigt hat, dass eine unveränderliche Wasserdurchströmung und eine entsprechend abgestimmte Menge Kohlensäure für den optimalen Effekt des Mixers notwendig sind.

Es ist lt. europäischer Patentanmeldung 0102 401 ein Verfahren bekannt, welches durch Zusatz von CO₂ in Kombination mit einer Elektrolyseanlage oder einer anderen Korrosionsverhinderung, Steinbildung im Wassersystem verhindert. Doch ist in diesem Dokument nicht angeführt, wie die Menge von CO₂ zu regulieren ist und wie das CO₂ vom Wasser aufgenommen werden kann.
Ferner ist in FR AI 297 827 beschrieben, dass die Steuerung der CO₂ Dosierung ausschließlich durch die Messung des pH's nach der Dosierungsstelle für CO₂ gegeben ist. Dieses ist eine umständliche, Service fordernde und oft ungenaue Methode die Steuerung vorzunehmen, wohingegen die Steuerung in der vorliegenden Erfindung sehr einfach ist, leicht zu montieren und zu betreiben und zufriedenstellend.

Es sind Installationen bekannt, bei denen die Dosierung von Kohlensäure durch Druckverlust im Wasser zustande kommt, der auf eine Membran einwirkt und hierdurch eine lineare Dosierung bewirkt. Doch eignet sich dieses System hauptsächlich für größere Wassergeschwindigkeiten mit eingebautem Injektor.
Das Verfahren ist unter diesen Verhältnissen effektiv, aber kostspielig die Erfindung umfaßt auch ein Verfahren das billig und flexibel ist, dieses ist nachstehend näher erläutert:

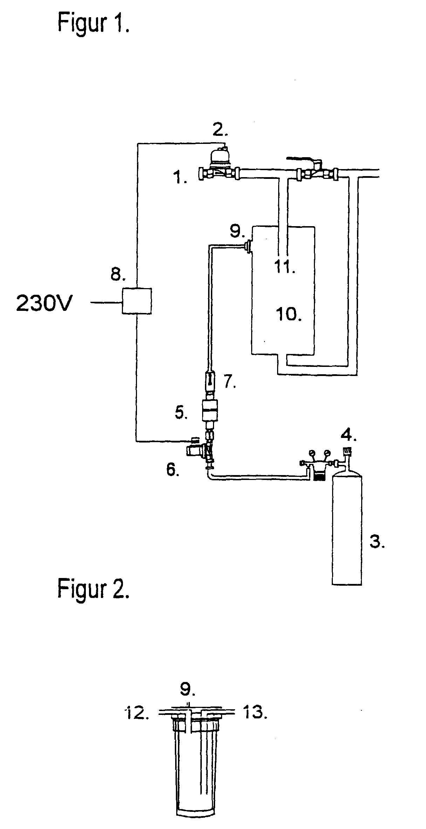

In Fig. 1 ist ein Beispiel, wo das Wasser, dem CO₂ dosiert wird, wird bei 1 eingeführt, und 2 ist eine impulsgebende Wasseruhr, 3 eine Flasche mit CO₂, 4 ein Druckreduzierventil, 5 eine Messblende, 7 ein Rückschlagventil, 8 ein Zeitschaltwerk das durch Impulse von der Wasseruhr 2 die Öffnung des Magnetventils 6 bewirkt, so dass CO₂ beim Zugang 9 des senkrecht montierten Behälters 10 zugeführt wird, wo innen ein eingetauchtes Abgangsrohr 11 montiert ist, in dem das stoßweise zugeführte CO₂ aufbewahrt wird. Der Behälter 10 ist entweder im Vollstrom oder im Teilstrom der Wasserversorgung montiert, so wie auch der Anschluss zum Warmwasserrohr vorgenommen werden kann, wo Steinablagerung verhindert werden soll.
   Behälter 10 kann auch ein normales Filtergehäuse sein, wie in Fig. 2 veranschaulicht, wo der Filter herausgenommen ist und im Zeichnungsbeispiel, anstatt dem Abgang unten ein inneres Rohr auf dem Abgangsstutzen angebracht ist, wo das Wasser mit der Dosierung von CO₂ bei 9 zum Filtergehäuse bei 12 geführt wird mit Abgang bei 13.

Eine Anwendung der Erfindung ist die Dosierung vom Wasser, das auf eine hohe Temperatur erwärmt werden soll, wo mit einer korrekten Dosierung von CO₂ Steinablagerung verhindert werden kann. Die Dosierungsmenge von CO₂ ist von der Temperatur abhängig auf die das Wasser erwärmt werden soll und natürlich auch von der Härte. In der Praxis wird zwischen 2 und 4 mg CO₂ pro Härtegrad pro Liter Wasser angewandt, d.h. dass zu 10 Liter Wasser mit einer Härte von 20 dH zwischen 40 und 80 mg CO₂ zugesetzt werden muss um Steinablagerungen zu verhindern.
Die Dosierungsmenge kann wesentlich größer sein, soll schon existierende Steinablagerung entfernt werden oder wenn die CO₂-Dosierung für andere Zwecke gedacht ist.
Die impulsgebende Wasseruhr gibt bei jedem Verbrauch eine Reaktion entweder pro Liter oder 10 Liter oder das Zeitschaltwerk ist so eingestellt, dass mit variierender Zeit mit einer festen Blende, montiert nach einem normalen Druckreduzierventil eine exakte Menge CO₂ eine kürzere Zeit dosiert wird, als die Intervalle zwischen den Impulsen der Wasseruhr. Diese Methode eignet sich besonders bei Anlage mit variierendem Verbrauch. Versuche sind durchgeführt worden mit einer Dosierung im Behälter 10, mit extrem langsamer Durchströmung des Wassers, mit einer Blende, die im Laufe von 0,15 Sekunden 120 mg CO₂/l dosiert, wo die pH-Messung zeigte, das die betreffende Wasserqualität der ersten Wasserentnahme denselben pH-Wert hatte, wie in dem Wasser, das ca. nach 2 Minuten gezapft wurde - unmittelbar vor einem neuen Impuls und somit einer Dosierung. Dasselbe war der Fall, wenn die Wasseruhr alle 10 Liter Wasser Impulse gab und einer Dosierung von 10 mal so viel CO₂.
Die zu den Versuchen angewandten Blenden sind Edelstahlplatten mit einem Loch zwischen 0,065 und 0,25 mm, d.h. bei Anlagen mit einem Wasserverbrauch, wo z.B. eine Dosierung von 40mg CO₂/l erwünscht ist, wo sich die erstgenannte Blende für eine Installation mit einem Verbrauch bis zu 800 Liter Wasser/h eignet, und die andere Blende für einen Verbrauch von ca. 23.000 l/h mit einer Öffnungszeit des Magnetventils von 0,15 Sekunden. Natürlich kann das Areal der Blende entsprechend der maximal durchströmenden Wassermenge geändert werden und der Einschaltzeit des Magnetventils.

CO₂ wird effektiv aufgenommen durch den nach unten geführten Wasserstrom und hierfür ist ein traditionelles Filtergehäuse ausreichend.

Außerdem kann eine Wasserbehandlungsanlage im Filtergehäuse eingebaut werden oder in einen Behälter, bestehend aus einer Elektrolyseanlage mit Aluminium und/oder Zink als Anoden und/oder Kathoden. Die Elektrolyseanlage kann jedoch auch in einen separaten Behälter eingebaut werden.
Die Wasserbehandlung kann auch eine Dosierung von hauptsächlich anodischen Inhibitoren sein wie Silikat, Phosphat, wo ein niedrigerer pH-Wert eine Ausfällung begünstigt.

## Patentansprüche

1. Einrichtung zur Dosierung von CO₂ in Wassersystemen dadurch gekennzeichnet, dass die Dosierungsmenge anhand einer festen Blende konstant ist, aber dass die Dosierungsperiode stoßweise vorkommt, abhängig der im Voraus gewählten Einstellung entsprechend dem Wasserverbrauch und der Wasserqualität durch ein Magnetventil, gesteuert durch eine impulsgebende Wasseruhr und wo das dosierte CO₂ oben zugeführt wird in einen senkrecht montierten Behälter mit einem eingetauchten Zugangsrohr (11) zur Aufbewahrung des stoßweise dosierten CO_{2'}'s und mit einer Wasserentnahme unten am Behälter.

2. Einrichtung lt. Forderung 1, dadurch gekennzeichnet, dass der senkrecht montierte Behälter aus einem traditionellen Filtergehäuse besteht wie in Fig. 2 veranschaulicht mit Zugang des Wassers und CO₂ oben, Abgang unten oder durch ein Rohr, das nach oben geführt wird.

3. Einrichtung lt. Forderung 2, dadurch gekennzeichnet, dass in den senkrecht montierten Behälter oder in das Filtergehäuse eine korrosionsverhindernde Elektrolyseanlage montiert ist mit Aluminium und/oder Zink Anoden und/oder Kathoden.

4. Einrichtung lt. Forderung 3, gekennzeichnet dadurch, dass die Elektrolyseanlage in einem separaten Behälter installiert ist, angeschlossen an dasselbe Rohrsystem.

5. Einrichtung lt. Forderung 3 oder 4, dadurch gekennzeichnet, dass CO₂ nur dosiert werden kann, wenn die Elektrolyseanlage korrekt eingestellt ist.

6. Einrichtung lt. Forderung 1 und 2 dadurch gekennzeichnet, dass eine korrosionsverhindernde Wasserbehandlungsanlage angewandt wird, hauptsächlich eine Dosierungsanlage für anodische Inhibitoren wie Silikat und/oder Phosphat.
